# NEUE EUROPÄISCHE PATENTSCHRIFT

(11) **EP 1 849 569 B2**
(45) Veröffentlichungstag und Bekanntmachung des Hinweises auf die Entscheidung über den Einspruch: **09.12.2020**
(45) Hinweis auf die Patenterteilung: 25.07.2012
(21) Anmeldenummer: 07003846.8
(22) Anmeldetag: 26.02.2007
(51) Int. Cl.: B26D 7/08, B29C 65/08

(54) **Vorrichtung zum Bearbeiten von Werkstücken mittels Ultraschall sowie Verfahren zum Betreiben einer derartigen Vorrichtung**
Device for machining workpieces using ultrasound and method for operating such a device
Dispositif destiné à usiner des pièces à l'aide d'ultrasons et procédé de fonctionnement d'un tel dispositif

(30) Priorität: 26.04.2006 DE 102006020429; 24.08.2006 DE 102006041655
(43) Veröffentlichungstag der Anmeldung: 31.10.2007
(73) Patentinhaber: Herrmann Ultraschalltechnik GmbH & Co. KG, 76307 Karlsbad-Ittersbach (DE)
(72) Erfinder: Vogler, Ulrich, 88690 Uhldingen (DE)
(74) Vertreter: WSL Patentanwälte Partnerschaft mbB

(56) Entgegenhaltungen:
- EP-A1- 0 920 977
- EP-A2- 0 144 119
- DE-A1- 1 904 606
- DE-A1- 10 009 174
- DE-A1- 10 126 943
- US-A- 4 227 959
- US-A- 4 409 659
- US-A- 4 693 771
- US-A- 4 752 351
- US-A- 5 944 924

## Beschreibung

Die Erfindung betrifft ein Verfahren und eine Vorrichtung zum Bearbeiten von Werkstücken mittels Ultraschall.

Vorrichtungen zum Bearbeiten von Werkstücken sind bekannt aus der EP-A-1 108 494, der EP-A-1 466 709, der DE-A- 696 21 134, der DE-U-295 07 068, der DE-A-35 29 686, der DE-A-197 16 018, der WO-A-96 109 919, der EP-A-1 112 823, der DE-A-195 81 256, der DE-A-44 39 284, der WO-A-96 014 202, der DE-A-10 2004 013 050, der DE-A-10 2004 013 049 und der DE-U-202 06 561. Mit derartigen Vorrichtungen können Thermoplaste, Fliese, Papiere und dergleichen bearbeitet, insbesondere geschnitten werden. Das Ziel ist dabei, durch Einsatz von Ultraschall, die Schneidkräfte zu reduzieren und/oder die Schnittkante zu optimieren.

Eine bekannte Technik ist der freie Schnitt, bei dem ein Ultraschallwerkzeug als Schneidwerkzeug ausgebildet ist und eine Materialbahn oder ein Werkstück ohne Gegenwerkzeug geschnitten wird. Dabei bewegt sich das als Ultraschallmesser ausgebildete Ultraschallwerkzeug relativ zum Werkstück in Richtung der Schneidlinie. Das Ultraschallwerkzeug kann auch als rotierendes Messer ausgebildet sein. In diesem Fall wird zusätzlich noch eine Rotationsbewegung ausgeführt. Dieser freie Schnitt kommt hauptsächlich beim Schneiden von Gewebebahnen zum Einsatz. Die Schneidkraft resultiert bei diesem Verfahren hauptsächlich aus der Schnittgeschwindigkeit, der Schneidgeometrie, dem Schnittwinkel und dem Werkstück selbst.

Eine weitere bekannte Technik ist der geformte Schnitt mit einem Gegenwerkzeug, bei dem zusätzlich ein Schneiddruck zwischen dem Ultraschallwerkzeug und dem Gegenwerkzeug aufgebaut wird. Auf diese Weise können nahezu beliebig hohe Schneidkräfte erzeugt werden. Die erforderliche Schneidkraft wird entweder durch eine kraftabhängige Zustellbewegung erzeugt oder über einen festen Spalt zwischen dem Ultraschallwerkzeug und dem Gegenwerkzeug. Durch diesen Spalt wird das zu bearbeitende Werkstück hindurchgezwängt.

Eine weitere Technik ist der kontinuierlich geformte Schnitt. Hierbei kann das Ultraschallwerkzeug so ausgeführt sein wie beim freien Schnitt, zum Beispiel als Ultraschallmesser. Aber es wird eine zusätzliche Kraft auf das zu bearbeitende Werkstück ausgeübt, indem das Werkstück zwischen das Ultraschallmesser und das Gegenwerkzeug gedrückt wird. Der Schneiddruck erhöht sich dabei erheblich. Das Gegenwerkzeug kann dabei als einfache Platte oder als rotierender Zylinder ausgebildet sein. Ebenso ist es möglich, das Ultraschallwerkzeug ohne Schneidgeometrie auszuführen und die Schneidgeometrie in das Gegenwerkzeug zu legen.

Eine weitere bekannte Technik besteht darin, einen getakteten geformten Schnitt auszuführen. Dabei wird zyklisch zwischen dem Ultraschallwerkzeug und dem Gegenwerkzeug eine Schneidkraft aufgebaut. Dabei kann die Schneidgeometrie im Ultraschallwerkzeug und/oder im Gegenwerkzeug vorgesehen sein. Das Werkstück wird bei diesem Verfahren eindimensional, zweidimensional oder sogar dreidimensional bearbeitet. Zusätzlich und überlagert zur Schnittkraft wird auf das Werkstück und auf das Gegenwerkzeug eine Schwingungsamplitude des Werkzeugs mit einer vorgegebenen Resonanzfrequenz, die zum Beispiel zwischen 20 und 60 kHz beträgt, aufgebracht. Das Ultraschallwerkzeug bewegt sich während des Taktes um einen Verschiebeweg in Richtung des Gegenwerkzeugs. Das Gegenwerkzeug ist in diesem Fall starr eingebaut und führt keine Bewegung durch. Berühren sich das Ultraschallwerkzeug und das Gegenwerkzeug, dann ist das Werkstück in der Regel durchtrennt. Es besteht auch die Möglichkeit, das Ultraschallwerkzeug fest einzuspannen und die Kraft sowie den Verfahrweg vom Gegenwerkzeug ausführen zu lassen. Bei beiden Varianten ist das eine Werkzeug fix eingespannt und die Zustellbewegung und die Schneidkraft wird vom anderen Werkzeug aufgebracht.

Es besteht auch die Möglichkeit, den Verfahrweg zu begrenzen. Dies kann zum Beispiel durch einen exakt einstellbaren Endanschlag erfolgen, oder durch genau positionierbare und fixierbare Schlitten, die zum Beispiel von einer Spindel mit Servomotor angetrieben werden. Hierdurch lässt sich ein bestimmter Schweißspalt einstellen. Soll das Werkstück vollständig durchtrennt werden, dann muss dieser Schweißspalt auf Null oder nahezu Null eingestellt werden.

Als problematisch hat sich bei diesen Techniken herausgestellt, dass dann, wenn das Werkstück durchtrennt ist, es zu einem Kontakt zwischen dem Ultraschallwerkzeug und dem Gegenwerkzeug kommt. Die Schneidkraft presst die Flächen aufeinander, die mit der vorherrschenden Frequenz von 20 bis 60 kHz aufeinander schlagen. Hierbei entstehen unkontrollierte Kräfte, Bewegungen und Schwingungen, die unter anderem auch hörbar sind. Innerhalb sehr kurzer Zeit verschleißen sowohl das Ultraschallwerkzeug als auch das Gegenwerkzeug, indem Eingrabungen und Verformungen an den Kontaktflächen entstehen. Dieser Verschleiß kann durch härtere Ausführung der Kontaktflächen, zum Beispiel durch eine Beschichtung oder einen härteren Stahl reduziert, jedoch nicht komplett verhindert werden. Zudem können nicht beliebig viele Materialien beziehungsweise beliebige Härtegrade beim Ultraschallbearbeiten eingesetzt werden, da die verwendbaren Werkstoffe für die Werkzeuge sehr limitiert sind. Die Schnittqualität nimmt mit Zunahme des Verschleißgrades der Werkzeuge stark ab, weshalb dieses häufig gewechselt werden müssen.

Elektronische Regelungen sind zur Verminderung des Verschleißes zwar denkbar und auch schon teilweise realisiert. Jedoch kann auch durch eine schnelle Abschaltung des Ultraschalls beziehungsweise eine schnelle Aufhebung der Schnittkraft beziehungsweise ein schnelles Wegfahren des Ultraschallwerkzeugs vom Gegenwerkzeug eine Kontaktierung nicht ausgeschlossen werden. Aufgrund der hohen Frequenz der Ultraschallwerkzeuge kommt es nach wie vor zu einer relativ hohen Anzahl an Kontakten. Wird zum Beispiel mit einer Frequenz von 20 kHz gearbeitet und wird innerhalb von 1 ms die Rückstellbewegung des Ultraschallwerkzeugs eingeleitet, dann kommt es während dieser 1 ms immer noch zu 20 Kontakten zwischen dem Ultraschallwerkzeug und dem Gegenwerkzeug.

Als problematisch hat sich außerdem herausgestellt, dass eine exakte Einstellung des Ultraschallwerkzeugs zum Gegenwerkzeug das Kontaktierungsproblem nicht löst, da die relative Position der Komponenten zueinander durch eine Vielzahl von Variablen beeinflusst wird. Erwärmt sich zum Beispiel das Ultraschallwerkzeug, so verändert sich die Spalthöhe aufgrund der Ausdehnung, was sich direkt auf die Schnittqualität auswirkt. Andere Variablen sind die Raumtemperatur, die Prozesstemperatur, Kraftschwankungen und so weiter.

Aus der US 5 944 924 A, der US 4 693 771 A, der US 4,752 351A, der US 4,227,959 und der EP 0 144 119 sind Vorrichtungen mit gefederten Gegenwerkzeugen bekannt.

Der Erfindung liegt die daher die Aufgabe zugrunde, eine Vorrichtung zum Bearbeiten von Werkstücken mittels Ultraschall und/oder ein Verfahren zum Betreiben einer derartigen Vorrichtung bereitzustellen, mit welcher eine bessere Schnittqualität sowie eine längere Standzeit der Werkzeuge erzielt werden kann.

Diese Aufgabe wird mit einer Vorrichtung und/oder einem Verfahren mit den Merkmalen der unabhängigen Patentansprüche gelöst.

Gemäß Anspruch 1 ist die Resonanzfrequenz des Ambosses mit Gegenwerkzeug kleiner als die Resonanzfrequenz des Schwinggebildes, nämlich um den Faktor 10² bis 10⁴, bevorzugt um den Faktor 10³. Diese Ausgestaltung hat den wesentlichen Vorteil, dass das Gegenwerkzeug mit seiner Arbeitsfläche an der Position der maximalen Auslenkung, d.h. am Scheitelpunkt der Arbeitsfläche der Ultraschallsonotrode verharrt, da aufgrund der geringeren Eigenfrequenz des Gegenwerkzeuges dieses nicht der hochfrequenten Bewegung der Ultraschallsonotrode folgen kann. Die Eigenresonanz des Ambosssystems ist deutlich kleiner als die Eigenresonanz des Ultraschallschwinggebildes, insbesondere der Ultraschallsonotrode. Hierdurch wird ein unkontrolliertes Aufschwingen des Gegenwerkzeuges verhindert.

Die erfindungsgemäße Vorrichtung besitzt den wesentlichen Vorteil, dass das Gegenwerkzeug nicht starr gehalten wird, sondern eine Kraft in Richtung der Ultraschallsonotrode ausübt, was bedeutet, dass das Gegenwerkzeug auch ausweichen kann, wenn diese Kraft von der Ultraschallsonotrode überschritten wird. Ändert sich zum Beispiel aufgrund von Temperaturschwankungen der Schneidspalt, dann wird das Gegenwerkzeug entweder nachgeführt oder weicht der Ultraschallsonotrode aus, wodurch zum einen eine hohe Schnittqualität beibehalten wird, zum anderen die Abnutzung an den Arbeitsflächen der Werkzeuge wesentlich vermindert wird.

Bei einer Weiterbildung ist vorgesehen, dass die Verfahrkraft des Schlittens größer ist als die Zustellkraft des Kraftspeichers, insbesondere um den Faktor 1,2 bis 5,0, bevorzugt um 1,5 bis 2,0. Hierdurch wird bewirkt, dass beim Zustellen der Ultraschallsonotrode und/ oder beim Einführen des Werkstücks zwischen die Ultraschallsonotrode und das Gegenwerkzeug nicht die Ultraschallsonotrode, sondern das Gegenwerkzeug ausweicht, wodurch verhindert wird, dass die Arbeitsflächen beschädigt werden. Dabei beträgt die Verfahrkraft des Schlittens mindestens 50 N, insbesondere einen Wert von 200 N bis 5000 N, bevorzugt 800 N bis 2000 N. Erfindungsgemäß ist der Kraftspeicher eine mechanische, pneumatische und/oder hydraulische Feder oder ein Magnet, insbesondere ein Elektromagnet. Dabei ist die vom Kraftspeicher aufbringbare Kraft so bemessen, dass sie sehr viel kleiner ist als die Verfahrkraft des Schlittens beziehungsweise der Ultraschallsonotrode, wobei die vom Kraftspeicher aufgebrachte Kraft die Schnittkraft darstellt.

Typische Schneidkräfte liegen zwischen 10 N und 2000 N. Dabei gilt, dass mit zunehmender Dicke des Werkstücks auch die Schneidkräfte zunehmen. Der von der mechanischen Feder gebildete Kraftspeicher kann zum Beispiel eine Wendelfeder, Tellerfeder oder Blattfeder sein. Insbesondere ist die Kraft des Kraftspeichers auf gewünschte Werte einstellbar.

Das Aufschwingen wird vorteilhaft noch dadurch vermindert, dass der Amboss und insbesondere Kraftspeicher für das Gegenwerkzeug ein Dämpfungselement aufweist. Dieses Dämpfungselement kann auch allgemein im Ambosssystem untergebracht sein, zum Beispiel als Dämpfungselement am Gegenwerkzeug, insbesondere als Reibungsdämpfer. Eine ebenfalls einfache Maßnahme sieht vor, dass die Lager derart ausgeführt sind, dass die Lagerreibung diese dämpfende Eigenschaft besitzt.

Gemäß einer bevorzugten Ausführungsform sind die Ultraschallsonotrode und das Gegenwerkzeug ausschließlich koaxial aufeinander zu bewegbar. Dies wird durch qualitativ hochwertige Führungen innerhalb des Ultraschallschwingsystems sowie innerhalb des Ambosssystems erreicht. Die Qualität des Schnitts beziehungsweise der Schweißung wird dadurch wesentlich erhöht. Dabei kann die Ultraschallsonotrode und/oder das Gegenwerkzeug eine Schneidkante und/oder eine Schweißkante aufweisen.

Eine Weiterbildung sieht vor, dass ein Festanschlag für den Schlitten, mit welchem die Ultraschallsonotrode verfahren wird, vorgesehen ist. Hierdurch wird eine definierte Zustellung und die Einstellung eines exakten Schweiß- oder Schneidspaltes ermöglicht und außerdem die Ultraschallsonotrode optimal fixiert.

Für eine weitere Optimierung der Schnittgeschwindigkeit und/oder Verringerung des Verschleißes der Werkzeuge kann einerseits die Einschwingzeit des Ultraschallsystems verlängert oder andererseits während des Schnitts die Amplitude und/oder Schnittkräfte zeitabhängig variiert werden. Zum Beispiel wird gegen Ende des Schnittes die Schnittkraft und/oder die Amplitude reduziert. Längere Einschwingzeiten sind vorteilhaft hinsichtlich des Verschleißes, verursachen jedoch eine längere Schneidzeit.

Die Schweißflächen können zusätzlich im gleichen, die Schneidkante aufweisenden Werkzeug vorhanden sein, oder es können zusätzliche Werkzeuge mit der Schweißfläche vorgesehen sein.

Die Ultraschallsonotrode wird also nicht nur so weit zugestellt, bis sie das Werkstück berührt, sondern die Ultraschallsonotrode verschiebt das Gegenwerkzeug und drückt dabei mit einer vorgegebenen Zustellkraft auf das Werkstück. Bei diesem Vorgang wird das Gegenwerkzeug um einen Arbeitsweg verschoben. Durch die Auslenkung des Gegenwerkzeugs wird sichergestellt, dass das Werkstück, welches über das Gegenwerkzeug an die Ultraschallsonotrode angedrückt wird, vollständig bearbeitet, insbesondere vollständig durchtrennt, wird. Dabei spielen temperaturbedingte Längenänderungen im gesamten System keine Rolle. Die geringe Eigenfrequenz, resultierend aus Masse, Federrate und Dämpfung des Gegenwerkzeugs, verhindert eine Beschädigung der Arbeitsflächen, da das Gegenwerkzeug am äußeren Scheitelpunkt des Ultraschallwerkzeugs stehen bleibt.

Weitere Vorteile, Merkmale und Einzelheiten der Erfindung ergeben sich aus den Unteransprüchen sowie der nachfolgenden Beschreibung, in der unter Bezugnahme auf die Zeichnung zwei besonders bevorzugte Ausführungsbeispiele im Einzelnen beschrieben sind.

In der Zeichnung zeigen:
- Figur 1: einen schematischen Aufbau einer ersten Ausführungsform der erfindungsgemäßen Vorrichtung;
- Figur 2: einen schematischen Aufbau einer zweiten Ausführungsform der erfindungsgemäßen Vorrichtung;
- Figur 3: einer Variante der Ausführungsform der Figur 2; und
- Figur 4: einen schematischen Aufbau einer dritten Ausführungsform der erfindungsgemäßen Vorrichtung.

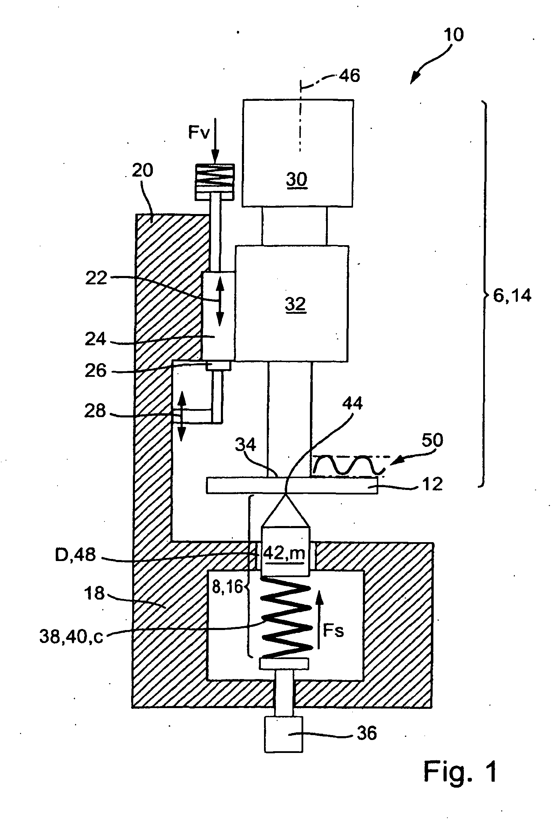

Die Figur 1 zeigt eine insgesamt mit 10 bezeichnete Vorrichtung zum Bearbeiten eines Werkstücks 12 mittels Ultraschall. Die Vorrichtung 10 besteht aus einem ersten Werkzeugteil 6, das in der Figur 1 von einem Ultraschallschwinggebilde 14 gebildet wird, und einem zweiten Werkzeugteil 8, das von einem Amboss 16 gebildet wird, der unterhalb des Ultraschallschwinggebildes 14 angeordnet ist. Der Amboss 16 befindet sich in einem Maschinengestell 18, an dessen Arm 20 das Ultraschallschwinggebilde 14 über einen in Richtung des Doppelpfeils 22 verfahrbaren Schlitten 24 befestigt ist. Außerdem ist ein Festanschlag 26 erkennbar, dessen Position in Richtung des Doppelpfeils 28 einstellbar ist. Das Ultraschallschwinggebilde 14 weist einen Konverter 30 sowie eine Ultraschallsonotrode 32 auf, deren Arbeitsfläche 34 an der Oberseite des Werkstücks 12 anliegt. Der Amboss 16 ist mit einer Einstellvorrichtung 36 versehen, die im Maschinengestell 18 gelagert ist. An der Einstellvorrichtung 36 ist ein von einer mechanischen Feder 38, z.B. einer Wendelfeder, gebildeter Kraftspeicher 40 befestigt, an welchem wiederum ein Gegenwerkzeug 42 gelagert ist. Die Arbeitsfläche 44 des Gegenwerkzeugs 42, die beim gezeigten Ausführungsbeispiel als Schneidkante dargestellt ist, liegt an der Unterseite des Werkstücks 12 an und befindet sich gegenüber der Arbeitsfläche 34 der Ultraschallsonotrode 32.

Das Ultraschallschwinggebilde 14 und der Amboss 16 sind achsparallel, insbesondere koaxial zueinander ausgerichtet. Mit der Einstellvorrichtung 36 kann das Gegenwerkzeug 42 mit einer vorbestimmten Kraft, insbesondere Zustellkraft Fₛ auf das Werkstück 12 gepresst werden. Diese Zustellkraft Fₛ wird in der Feder 38 gespeichert.

Ferner ist erkennbar, dass das Gegenwerkzeug 42 im Maschinengestell 18 in einem Lager 48 in Richtung der Vertikalachse 46 verschieblich gelagert ist, wobei das Lager 48 eine Lagerreibung aufweist, welche eine Dämpfung D bewirkt. Das Gegenwerkzeug 42 besitzt eine Masse m. Außerdem weist die Feder 38 eine Federkonstante c auf. Somit ergibt sich für den Amboss 16 eine Resonanzfrequenz f_{A} = f(m, c, D), die sich aus der Masse m des Gegenwerkzeugs 42, der Federkonstante c der Feder 38 sowie der Dämpfung D des Lagers 48 bestimmt.

Aus der Figur 1 ist noch erkennbar, dass der Schlitten 24 mit einer insbesondere einstellbaren Verfahrkraft Fᵥ auf den Festanschlag 26 drückt. Dabei ist die Verfahrkraft Fᵥ wesentlich größer als die Zustellkraft Fₛ (Fᵥ >> Fₛ), so dass das Werkstück 12 zusammen mit dem Gegenwerkzeug 42 verschoben und die Feder 38 komprimiert und die Kraft Fₛ in der Feder 38 gespeichert wird.

Nachfolgend wird die Arbeitsweise der Vorrichtung 10 gemäß Figur 1 beschrieben. Wie bereits erwähnt, fährt das Ultraschallschwinggebilde 14 mittels des Schlittens 24 in Richtung des Ambosses 16, bis die Arbeitsfläche 34 der Ultraschallsonotrode 32 auf dem Werkstück 12 aufsitzt. Anschließend drückt die Ultraschallsonotrode 32 das Werkstück 12 zusammen mit dem Gegenwerkzeug 42 so weit in Richtung der Einstellvorrichtung 36, d.h. in der Figur 1 nach unten, bis der Schlitten 24 am Festanschlag 26 aufsitzt. Dadurch baut sich in der Feder 38 eine Zustellkraft oder Schneidkraft Fₛ auf, mit der die Arbeitsfläche 44 an der Unterseite des Werkstücks 12 anliegt und das Werkstück 12 an die Arbeitsfläche 34 der Ultraschallsonotrode 32 presst.

Sodann wird die Ultraschallsonotrode 32 in Gang gesetzt, so dass die Arbeitsfläche 34 mit dem eingestellten Ultraschall schwingt, wie bei 50 dargestellt. Dadurch wird das Werkstück 12 durchtrennt und die Arbeitsfläche 44 des Gegenwerkzeugs 42 dringt in das Werkstück 12 ein. Die Schnittkraft Fₛ wird ausschließlich durch das Gegenwerkzeug 42 aufgebracht, da die Ultraschallsonotrode 32 am Festanschlag 26 anliegt.

Sobald das Werkstück 12 durchtrennt ist, kommen die Arbeitsflächen 34 und 44 kurzzeitig in Kontakt, wobei nun aber das Gegenwerkzeug 42 in dieser Position verharrt. Das Gegenwerkzeug 42 kann der hochfrequent schwingenden Arbeitsfläche 34 der Ultraschallsonotrode 32 nicht folgen, da die Eigenfrequenz oder Resonanzfrequenz des Gegenwerkzeugs 42 wesentlich niedriger liegt, insbesondere um den Faktor 10³, als die Schwingfrequenz der Ultraschallsonotrode 32. Daher verharrt die Arbeitsfläche 44 in Ruhe. Dies kann durch geeignete Wahl der Masse m, der Federkonstante c sowie der Dämpfung D erreicht werden. Da sich die Arbeitsflächen 34 und 44 dennoch berühren, und um einer übermäßigen Abnutzung vorzubeugen, besitzen sie eine Härte von mindestens 55 HRC.

Bei einer Variante ist die Arbeitsfläche 44 des Gegenwerkzeugs 42 nicht nur als Schneidkante ausgebildet, sondern weist gleichzeitig auch eine Schweißfläche auf, so dass mit dem Gegenwerkzeug 42 nicht nur geschnitten, sondern auch geschweißt werden kann. Auf diese Weise können aus mehreren Lagen bestehende Werkstücke 14 gleichzeitig geschnitten und die einzelnen Lagen miteinander verschweißt werden. Dies ist insbesondere bei Schlauchbeutelanlagen wünschenswert, in denen die einzelnen Schlauchbeutel befüllt und anschließend voneinander getrennt werden.

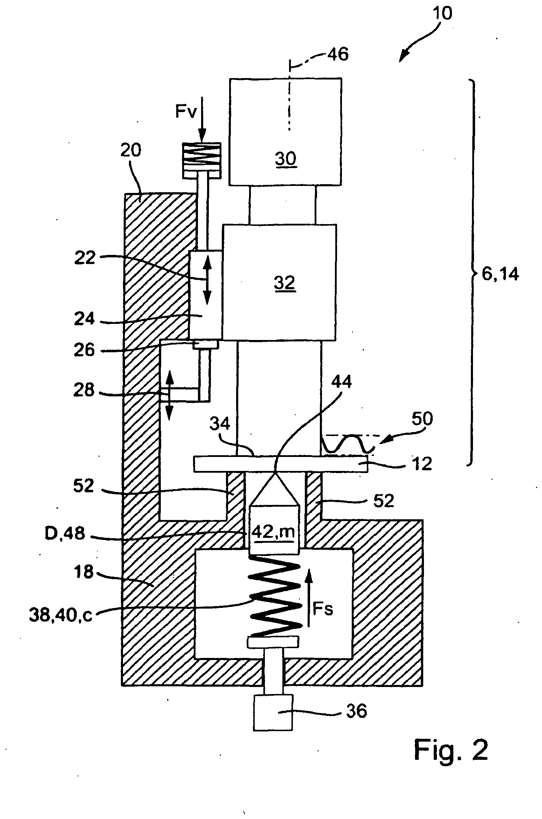

In der Figur 2 weist der Amboss eine Schneidkante 44 und eine Schweißkante 52 auf, wobei die Schweißkante 52 z.B. am Maschinengestell 18 befestigt ist. Das Werkstück 12 erfährt dann eine Schweißbearbeitung und wird zusätzlich geschnitten. Die Schneidkante 44, die empfindlich ist und geschützt werden muss, ist federnd gelagert.

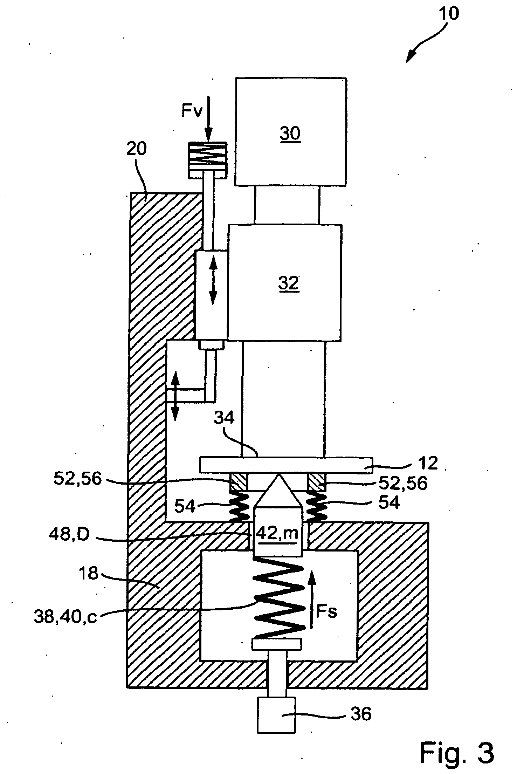

In der Figur 3 ist eine Variante der Vorrichtung 10 gemäß Figur 2 gezeigt. Dabei erfährt das Werkstück 12 ebenfalls gleichzeitig eine Schweißbearbeitung und wird geschnitten. Der Amboss 18 besitzt Schweißkanten 52, die in diesem Fall federnd gelagert sind. Die hierfür vorgesehenen Federn 54 tragen Schweißelemente 56, die am Werkstück 12 anliegen. Diese Variante besitzt den Vorteil, dass sie eine gewisse Flexibilität und Anpassungsfähigkeit zum Werkstück 12 und zur Sonotrode 32 aufweist. Eine exakte Parallelausrichtung des Ambosses zur Sonotrode 32 ist somit nicht mehr erforderlich. Die Federkraft und/oder Federsteifigkeit (C) der Schweißelemente 56 oder Schweißkante 52 ist sehr viel größer als die Federkraft und/oder Federsteifigkeit (c) des Gegenwerkzeugs 42. Als Federn 54 können mechanische Federn, wie Spiralfedern, Tellerfedern, oder hydraulische oder pneumatische Federn, oder Federn aus elastischen Materialien, wie Gummi, Kork usw. verwendet werden.

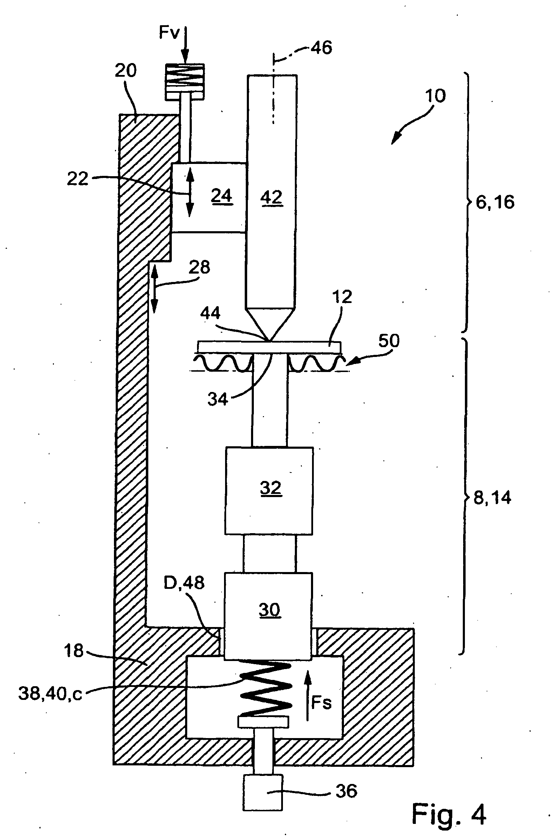

Die Figur 4 zeigt eine Dritte Ausführungsform der Erfindung, bei der die Vorrichtung 10 ein erstes Werkzeugteil 6 aufweist, das in diesem Fall von einem Ultraschallschwinggebilde 14 gebildet wird, und ein zweites Werkzeugteil 8 aufweist, das von einem Amboss 16 gebildet wird, der oberhalb des Ultraschallschwinggebildes 14 angeordnet ist. Im Übrigen entspricht der Aufbau im Wesentlich der der Figur 1.

Der Konverter 30 sowie die Ultraschallsonotrode 32 besitzen eine Masse m. Außerdem weist die Feder 38 eine Federkonstante c auf. Somit ergibt sich für das Ultraschallschwinggebilde 14 eine Resonanzfrequenz f_{U} = f(m, c, D), die sich aus der Masse m des Konverters 30 sowie der Ultraschallsonotrode 32, der Federkonstante c der Feder 38 sowie der Dämpfung D des Lagers 48 bestimmt.

## Patentansprüche

1. Vorrichtung (10) zum Bearbeiten von Werkstücken (12) mittels Ultraschall, mit einem ersten Werkzeugteil (6), nämlich einem Ultraschallschwinggebilde (14) mit einer Ultraschallsonotrode (32), und einem zweiten Werkzeugteil (8), nämlich einem Amboss (16) mit einem Gegenwerkzeug (42), wobei das erste Werkzeugteil (6) über einen Schlitten (24) in dessen Arbeitsrichtung (46) und in Richtung des zweiten Werkzeugteils (8) verfahrbar ist, wobei die Ultraschallsonotrode (32) und/oder das Gegenwerkzeug (42) eine Schneidkante (44) aufweist bzw. aufweisen, wobei ein Kraftspeicher (40) für das zweite Werkzeugteil (8) vorgesehen ist, mit dem das zweite Werkzeugteil (8) in Richtung des ersten Werkzeugteils (6) mit einer Kraft (Fs) beaufschlagt wird, und wobei die Resonanzfrequenz (f_{A} ) des Ambosses (16) mit Gegenwerkzeug (42) kleiner ist als die Resonanzfrequenz (fs) des Schwinggebildes (f_{A} << f_{S}), nämlich um den Faktor 10² bis 10⁴, bevorzugt um den Faktor 10³.

2. Vorrichtung nach Anspruch 1, **dadurch gekennzeichnet, dass** die Verfahrkraft (Fv) des Schlittens (24) mindestens 50 N beträgt.

3. Vorrichtung nach einem der vorhergehenden Ansprüche, **dadurch gekennzeichnet, dass** der Kraftspeicher (40) eine mechanische Feder (38), eine pneumatische und/oder hydraulische Feder oder ein Magnet, insbesondere ein Elektromagnet, ist.

4. Vorrichtung nach einem der vorhergehenden Ansprüche, **dadurch gekennzeichnet, dass** der Kraftspeicher (40) für das Gegenwerkzeug (42) ein Dämpfungselement aufweist.

5. Vorrichtung nach einem der Ansprüche 1 bis 4, **dadurch gekennzeichnet, dass** die Ultraschallsonotrode (32) und/oder das Gegenwerkzeug (42) eine Schweißkante (52) aufweist beziehungsweise aufweisen.

6. Vorrichtung nach Anspruch 5, **dadurch gekennzeichnet, dass** die Schneidkante (44) und/oder die Schweißkante (52) federnd gelagert ist bzw. sind.

7. Vorrichtung nach Anspruch 5 oder 6, **dadurch gekennzeichnet, dass** die Schweißkante (52) eine größere Federkonstante und/oder Federkraft (C >> c) aufweist, als die Schneidkante (44).

8. Vorrichtung nach einem der Ansprüche 5 bis 7, **dadurch gekennzeichnet, dass** die Schweißkante (52) am Maschinengestell (18) gelagert ist.

9. Vorrichtung nach einem der Ansprüche 1 bis 8, **dadurch gekennzeichnet, dass** die Verfahrkraft (Fᵥ) des Schlittens (24) grösser ist als die Zustellkraft (F_{S}) des Kraftspeichers(40) (Fᵥ >> F_{S}), insbesondere um den Faktor 1,2 bis 5,0 und bevorzugt um den Faktor 1,5 bis 2,0.

10. Verfahren zum Verwenden einer Vorrichtung nach einem der vorhergehenden Ansprüche, **dadurch gekennzeichnet, dass** das erste Werkzeugteil (6), insbesondere über das Werkstück (12), das zweite Werkzeugteil (8) in eine Arbeitslage verschiebt und dabei eine Zustellkraft (Fs) auf das Werkstück (12) ausübt.

11. Verfahren nach Anspruch 10, **dadurch gekennzeichnet, dass** das zweite Werkzeugteil (8) dabei um einen Teilbetrag eines maximalen Verschiebewegs verschoben wird.

12. Verfahren nach Anspruch 10 oder 11, **dadurch gekennzeichnet, dass** die Resonanzfrequenz des zweiten Werkzeugteils (8) so gewählt wird, dass dieses bei schwingendem ersten Werkzeugteil (6) am Scheitelpunkt der Arbeitsfläche (34) des ersten Werkzeugteils (6) verharrt.

13. Verfahren nach einem der Ansprüche 10 bis 12, **dadurch gekennzeichnet, dass** die Amplitude und/oder die Schnittkräfte während des Schnitts zeitabhängig variiert werden.

14. Verfahren zum Verwenden einer Vorrichtung (10) zum Bearbeiten von Werkstücken (12) mittels Ultraschall, mit einem ersten Werkzeugteil (6) und einem zweiten Werkzeugteil (8), wobei das erste Werkzeugteil (6) über einen Schlitten (24) in dessen Arbeitsrichtung (4,6) und in Richtung des zweiten Werkzeugteils (8) verfahrbar ist, wobei ein Kraftspeicher (40) für das zweite Werkzeugteil (8) vorgesehen ist, mit dem das zweite Werkzeugteil (8) in Richtung des ersten Werkzeugteils (6) mit einer Kraft (F_{S}) beaufschlagt wird, wobei das erste Werkzeugteil (6) ein Ultraschallschwinggebilde (14) mit einer Ultraschallsonotrode (32) oder ein Amboss (16) mit einem Gegenwerkzeug (42) und das zweite Werkzeugteil (8) ein Amboss (16) mit einem Gegenwerkzeug (42) oder ein Ultraschallschwinggebilde (14) mit einer Ultraschallsonotrode (32) ist und wobei die Resonanzfrequenz (f_{A}) des Ambosses (16) mit Gegenwerkzeug (42) kleiner ist als die Resonanzfrequenz (f_{S}) des Schwinggebildes (f_{A} << f_{S}), bei dem das erste Werkzeugteil (6), insbesondere über das Werkstück (12), das zweite Werkzeugteil (8) in einer Arbeitslage verschiebt und dabei eine Zustellkraft (Fs) auf das Werkstück (12) ausübt, wobei die Amplitude und/oder die Schnittkräfte während des Schnittes zeitabhängig variiert werden.

15. Verfahren nach Anspruch 13 oder 14, **dadurch gekennzeichnet, dass** gegen Ende des Schnittes die Schnittkraft und/oder die Amplitude reduziert wird.

## Claims

1. A device (10) for processing workpieces (12) by means of ultrasound, comprising a first tool part (6), namely an ultrasound oscillating structure (14) having an ultrasound sonotrode (32), and a second tool part (8),namely an anvil (16) having a counterpart tool (42), wherein the first tool part (6) is movable by way of a carriage (24) in its working direction (46) and in the direction of the second tool part (8), wherein the ultrasound sonotrode (32) and/or the counterpart tool (42) has or have a cutting edge (44), wherein there is provided a force storage means (40) for the second tool part (8), with which the second tool part (8) is urged in the direction of the first tool part (6) with a force (F_{S}), and wherein the resonance frequency (f_{A} ) of the anvil (16) with the counterpart tool (42) is less than the resonance frequency (f_{S}) of the oscillating structure (f_{A} << f_{S}), namely by the factor of 10² to 10⁴ and preferably by the factor of 10³.

2. A device according to claim 1 **characterised in that** the travel force (F_{V}) of the carriage (24) is at least 50N.

3. A device according to one of the preceding claims **characterised in that** the force storage means (40) comprises a mechanical spring (38), a pneumatic spring and/or a hydraulic spring or a magnet, in particular an electromagnet.

4. A device according to one of the preceding claims **characterised in that** the force storage means (40) for the counterpart tool (42) comprises a damping element.

5. A device according to one of claims 1 to 4 **characterised in that** the ultrasound sonotrode (32) and/or the counterpart tool (42) has/have a welding edge (52).

6. A device according to claim 5 **characterised in that** the cutting edge (44) and/or the welding edge (52) is/are mounting resiliently.

7. A device according to claim5 or claim 6 **characterised in that** the welding edge (52) has a greater spring constant and/or spring force (C >> c) than the cutting edge (44).

8. A device according to one of claims 5 to 7 **characterised in that** the welding edge (52) is mounted to the machine frame (18).

9. A device according to one of claims 1 to 8 **characterised in that** the travel force (F_{V}) of the carriage (24) is greater than the feed force (F_{S}) of the force storage means (40) (F_{V} >> F_{S}), in particular by the factor of 1.2 to 5.0, and preferably by the factor of 1.2 to 2.0.

10. A method of using a device according to one of the preceding claims **characterised in that** the first tool part (6) moves the second tool part (8) into a working position, in particular by way of the workpiece (12), and in so doing exerts a feed force (F_{S}) on the workpiece (12).

11. A method according to claim 10 **characterised in that** the second tool part (8) is moved by a partial amount of a maximum displacement travel.

12. A method according to claim 10 or claim 11 **characterised in that** the resonance frequency of the second tool part (8) is selected such that it stays at the apex of the working surface (34) of the first tool part (6) when the first tool part (6) oscillates.

13. A method according to one of claims 10 to 12 **characterised in that** the amplitude and/or cutting forces are varied in dependence on time during the cutting operation.

14. A method of using a device (10) for processing workpieces (12) by means of ultrasound, comprising a first tool part (6) and a second tool part (8), wherein the first tool part (6) is movable by way of a carriage (24) in its working direction (4, 6) and in the direction of the second tool part (8), wherein there is provided a force storage means (40) for the second tool part (8) with which the second tool part (8) is urged in the direction of the first tool part (6) with a force (F_{S}), wherein the first tool part (6) is an ultrasound oscillating structure (14) having an ultrasound sonotrode (32) or an anvil (16) having a counterpart tool (42) and the second tool part (8) is an anvil (16) having a counterpart tool (42) or an ultrasound oscillating structure (14) having an ultrasound sonotrode (32),and wherein the resonance frequency (f_{A}) of the anvil (16) with the counterpart tool (42) is less than the resonance frequency (f_{S}) of the oscillating structure (f_{A} << f_{S}), at which the first tool part (6) moves the second tool part (8) into a working position, in particular by way of the workpiece (12) and in so doing exerts a feed force (F_{S}) on the workpiece (12), wherein the amplitude and/or cutting forces are varied in dependence on time during the cutting operation.

15. A method according to claim 13 or claim 14 **characterised in that** the cutting force and /or the amplitude is reduced towards the end of the cutting operation.

## Revendications

1. Dispositif (10) d'usinage de pièces (12) au moyen d'ultrasons, comportant un premier élément d'outil (6), à savoir un ensemble vibrant à ultrasons (14) avec une sonotrode (32), et un deuxième élément d'outil (8), à savoir une enclume (16) avec un contre-outil (42), le premier élément d'outil (6) pouvant, au moyen d'un chariot (24), se déplacer dans sa direction de travail (46) et en direction du deuxième élément d'outil (8), la sonotrode (32) et/ou le contre-outil (42) comprenant une arête de coupe (44), un accumulateur d'énergie (40) étant prévu pour le deuxième élément d'outil (8), par lequel le deuxième élément d'outil (8) est soumis à une force (F_{S}) en direction du premier élément d'outil (6), et la fréquence de résonnance (f_{A}) de l'enclume (16) avec le contre-outil (42) étant inférieure à la fréquence de résonnance (f_{S}) de l'ensemble vibrant (f_{A} << f_{S}), notamment d'un facteur 10² à 10⁴, de préférence d'un facteur 10³.

2. Dispositif selon la revendication 1, **caractérisé en ce que** la force de déplacement (F_{V}) du chariot (24) est d'au moins 50 N.

3. Dispositif selon l'une quelconque des revendications précédentes, **caractérisé en ce que** l'accumulateur d'énergie (40) est un ressort mécanique (38), un ressort pneumatique et/ou ressort hydraulique ou un aimant, en particulier un électro-aimant.

4. Dispositif selon l'une quelconque des revendications précédentes, **caractérisé en ce que** l'accumulateur d'énergie (40) pour le contre-outil (42) comporte un élément amortisseur.

5. Dispositif selon l'une quelconque des revendications 1 à 4, **caractérisé en ce que** la sonotrode (32) et/ou le contre-outil (42) comporte(nt) une arête de soudure (52).

6. Dispositif selon la revendication 5, **caractérisé en ce que** l'arête de coupe (44) et/ou l'arête de soudure (52) est/sont montée(s) de manière élastique.

7. Dispositif selon la revendication 5 ou 6, **caractérisé en ce que** l'arête de soudure (52) possède une constante de rappel et/ou force élastique (C >> c) supérieure à celle(s) de l'arête de coupe (44).

8. Dispositif selon l'une quelconque des revendications 5 à 7, **caractérisé en ce que** l'arête de soudure (52) est agencée sur le bâti de la machine (18).

9. Dispositif selon l'une des revendications 1 à 8, **caractérisé en ce que** la force de déplacement (F_{V}) du chariot (24) est supérieure à la force de positionnement (F_{S}) exercée par l'accumulateur d'énergie (40) (F_{V} >> F_{S}), notamment d'un facteur 1,2 à 5,0 et de préférence d'un facteur 1,5 à 2,0.

10. Procédé de mise en œuvre d'un dispositif selon l'une quelconque des revendications précédentes, **caractérisé en ce que** le premier élément d'outil (6) pousse le deuxième élément d'outil (8) dans une position de travail, en particulier par le biais de la pièce (12), et exerce pour ce faire une force de positionnement (F_{S}) sur la pièce (12).

11. Procédé selon la revendication 10, **caractérisé en ce que** le deuxième élément d'outil (8) est alors déplacé d'une fraction d'une course maximale.

12. Procédé selon la revendication 10 ou 11, **caractérisé en ce que** la fréquence de résonnance du deuxième élément d'outil (8) est choisie de manière à ce que celui-ci reste au sommet de la surface de travail (34) du premier élément d'outil (6) lorsque le premier élément d'outil (6) vibre.

13. Procédé selon l'une quelconque des revendications 10 à 12, **caractérisé en ce que** l'on fait varier dans le temps l'amplitude et/ou les forces de coupe pendant l'opération de coupe.

14. Procédé de mise en œuvre d'un dispositif (10) d'usinage de pièces (12) au moyen d'ultrasons, comportant un premier élément d'outil (6) et un deuxième élément d'outil (8), le premier élément d'outil (6) pouvant, au moyen d'un chariot (24), se déplacer dans sa direction de travail (46) et en direction du deuxième élément d'outil (8), un accumulateur d'énergie (40) étant prévu pour le deuxième élément d'outil (8), par lequel le deuxième élément d'outil (8) est soumis à une force (F_{S}) en direction du premier élément d'outil (6), le premier élément d'outil (6) consistant en un ensemble vibrant à ultrasons (14) avec une sonotrode (32) ou en une enclume (16) avec un contre-outil (42) et le deuxième élément d'outil (8) consistant en une enclume (16) avec un contre-outil (42) ou en un ensemble vibrant à ultrasons (14) avec une sonotrode (32), et la fréquence de résonnance (f_{A}) de l'enclume (16) avec le contre-outil (42) étant inférieure à la fréquence de résonnance (fs) de l'ensemble vibrant (f_{A} << f_{S}), le premier élément d'outil (6) poussant le deuxième élément d'outil (8) dans une position de travail, en particulier par le biais de la pièce (12), et exerçant pour ce faire une force de positionnement (F_{S}) sur la pièce (12), l'amplitude et/ou les forces de coupe étant variée(s) dans le temps pendant l'opération de coupe.

15. Procédé selon la revendication 13 ou 14, **caractérisé en ce que** l'on réduit la force de coupe et/ou l'amplitude vers la fin de l'opération de coupe.
